# EUROPEAN PATENT APPLICATION

(11) **EP 3 605 039 A1**
(43) Date of publication of application: **05.02.2020**
(21) Application number: 18770538.9
(22) Date of filing: 13.03.2018
(51) Int. Cl.: G01J 1/02, G01J 1/42, G01M 11/00, G01M 11/02, G02B 6/42, H01S 3/00

(54) **SPREAD ANGLE MEASUREMENT DEVICE, SPREAD ANGLE MEASUREMENT METHOD, LASER DEVICE, AND LASER SYSTEM**

(30) Priority: 24.03.2017 JP 2017059779
(71) Applicant: Fujikura Ltd., Tokyo 135-8512 (JP)
(72) Inventor: HIDAKA, Hikaru, Sakura-shi Chiba 285-8550 (JP)
(74) Representative: Plasseraud IP
(86) International application number: PCT/JP2018/009628
(87) International publication number: WO 2018/173844

(57) **Abstract**

A divergence angle measurement device (15) is configured to monitor a divergence angle of laser light propagated in an optical fiber (F) having a core and a cladding. The divergence angle measurement device includes a first photodetector (31) that is configured to detect the laser light leaked from the cladding of the optical fiber, and a calculation unit (33). The calculation unit is configured to obtain the divergence angle of the laser light, according to the detection result of the first photodetector and power information indicating power of the laser light propagated in the optical fiber.

## Description

### Technical Field

The present invention relates to a divergence angle measurement device, a divergence angle measurement method, a laser apparatus, and a laser system.

Priority is claimed on Japanese Patent Application No. 2017-059779, filed on March 24, 2017, the content of which is incorporated herein by reference.

### Background Art

In recent years, a fiber laser apparatus attracts attention as a high-power laser apparatus used in the industrial field. This fiber laser apparatus is characterized in that its beam quality (BPP: Beam Parameter Product or M²) is superior and its light concentrating property is higher as compared with the high-power laser apparatus in the related art (for example, a carbon dioxide gas laser apparatus). Therefore, if the fiber laser apparatus is used instead of the carbon dioxide gas laser apparatus or the like in the related art, the processing time can be shortened, and energy saving can be achieved.

In such a fiber laser apparatus, for example, it is considered that the divergence angle of the launched laser light may increase due to deterioration over time or the like. When the divergence angle of the laser light increases, the beam quality is deteriorated, and the processing characteristics are changed. Therefore, in order to maintain the performance of the fiber laser apparatus, it is necessary to monitor the divergence angle of the laser light and to perform maintenance of the fiber laser apparatus according to the monitoring result.

Patent Documents 1, 2 disclose an example of related arts for measuring the divergence angle of a laser beam. Specifically, in Patent Document 1, in order to obtain the divergence angle θ, a part of the laser beams to be measured are branched by a beam splitter and focused by a measurement lens (focal length f), and the beam diameter d is measured by a charge coupled device (CCD) camera. Patent Document 1 discloses a technique for obtaining the divergence angle θ by the calculation expression θ = d/f. Further, Patent Document 2 discloses a technique for converting the radiant infrared energy into energy of a shorter wavelength at a predetermined distance from the end of the optical fiber, and recording the distribution of the energy of the shorter wavelength to calculate the numerical aperture of the optical fiber.

### Citation List

### Patent Literature

[Patent Document 1] Japanese Unexamined Patent Application, First Publication No. H10-47938
[Patent Document 2] Published Japanese Translation No. S64-500539 of the PCT International Publication

### Summary of Invention

### Technical Problem

Meanwhile, under the present circumstances, fiber laser apparatuses having a low output of about several tens of watts [W], a medium output of several hundreds of watts [W], and a high output of several kilowatts [kW] are realized. In the future, research and development of fiber laser apparatuses having high output are considered to be conducted in the direction of increasing output power, and fiber laser apparatuses having output power of several tens to hundreds of kW may be realized in the future.

In the configuration of Patent Document 1, it is necessary to split a part of the laser beams to be measured by the beam splitter. Therefore, it is difficult to monitor the divergence angle of the laser light launched from the fiber laser apparatus with high output in the actual operating state. In addition, in the configuration of Patent Document 1, in addition to optical elements such as a beam splitter and a measurement lens, an image pickup element such as a CCD camera is required, so the measurement apparatus becomes large.

In the configuration of Patent Document 2, it is necessary to dispose an up-conversion screen at a predetermined distance from the end of the optical fiber to convert the wavelength of infrared light launched from the end of the optical fiber. Therefore, as in the configuration of Patent Document 1, it is difficult to monitor the divergence angle of the laser light launched from the fiber laser apparatus with high output in the actual operating state.

The present invention has been made in view of the above circumstances, and an object of the present invention is to provide a divergence angle measurement device, a divergence angle measurement method, a laser apparatus, and a laser system, capable of measuring the divergence angle of laser light of high output with a simple configuration.

### Solution to Problem

In order to solve the above problems, a divergence angle measurement device according to a first aspect of the present invention is a divergence angle measurement device which is configured to monitor a divergence angle of laser light propagated in an optical fiber having a core and a cladding, including a first photodetector that is configured to detect the laser light leaked from the cladding of the optical fiber; and a calculation unit that is configured to obtain the divergence angle of the laser light, according to a detection result of the first photodetector and power information indicating power of the laser light propagated in the optical fiber.

Further, in the divergence angle measurement device, the optical fiber may be provided with a cladding light removal portion where cladding light propagated through the cladding leaks and where the cladding light is removed, and the first photodetector may be disposed in the cladding light removal portion, and is configured to detect the cladding light removed by the cladding light removal portion.

Further, the divergence angle measurement device may further include a second photodetector that is disposed in a vicinity of the optical fiber, and is configured to detect Rayleigh scattered light of the laser light propagated in the optical fiber, and the calculation unit may be configured to obtain the divergence angle of the laser light using a detection result of the second photodetector as the power information.

Further, the divergence angle measurement device may further include a second photodetector that is disposed in a vicinity of the optical fiber, and is configured to detect Rayleigh scattered light of the laser light propagated in the optical fiber, and the second photodetector may be provided farther on a light input side of the optical fiber than the cladding light removal portion.

Alternatively, the divergence angle measurement device may further include a temperature detector that is configured to detect the temperature of the cladding light removal portion, and the calculation unit may be configured to obtain the divergence angle of the laser light using a detection result of the temperature detector as the power information.

Alternatively, in the divergence angle measurement device, the calculation unit may be configured to obtain the divergence angle of the laser light using a detection result of a current detector that is configured to detect a drive current supplied to a laser light source which launches the laser light propagated in the optical fiber, as the power information.

Further, the divergence angle measurement device may further include an output unit that is configured to output first information indicating the divergence angle of the laser light obtained by the calculation unit, or second information indicating whether or not the divergence angle of the laser light obtained by the calculation unit is within a predetermined range.

Further, a divergence angle measurement method according to a second aspect of the present invention is a divergence angle measurement method for monitoring a divergence angle of laser light propagated in an optical fiber having a core and a cladding, the method including a detection step of detecting the laser light leaked from the cladding of the optical fiber; and a calculation step of obtaining the divergence angle of the laser light, according to the detection result of the detection step and power information indicating power of the laser light propagated in the optical fiber.

Further, a laser apparatus according to a third aspect of the present invention includes a laser light source; an optical fiber which has a core and a cladding, the optical fiber propagating laser light launched from the laser light source; and the divergence angle measurement device.

Further, the laser apparatus may further include an adjusting device that is configured to adjust the divergence angle of the laser light propagated in the optical fiber; and a control device that is configured to control the adjusting device according to a measurement result of the divergence angle measurement device.

Further, a laser system according to a fourth aspect of the present invention includes a plurality of laser apparatuses; a combiner that is configured to combine light launched from the plurality of laser apparatuses; an launching optical fiber that is configured to guide the light combined by the combiner; and the divergence angle measurement device which is configured to monitor a divergence angle of laser light propagated in the launching optical fiber.

### Advantageous Effects of Invention

According to the above aspects of the present invention, laser light leaked from a cladding of an optical fiber having a core and the cladding is detected by a first photodetector, and the divergence angle of the laser light is obtained according to the detection result of the first photodetector and power information indicating power of the laser light propagated in the optical fiber. Therefore, it is possible to measure the divergence angle of the laser light of high output with a simple configuration.

### Brief Description of Drawings

FIG. 1 is a block diagram showing a configuration of a laser apparatus according to a first embodiment.
FIG. 2 is a cross-sectional view showing an example of a delivery fiber of FIG. 1.
FIG. 3A is a view showing the configuration of a cladding light removal portion of FIG. 1.
FIG. 3B is a cross-sectional view taken along line A-A in FIG. 3A.
FIG. 4 is a diagram showing an approximate relationship between a divergence angle of laser light and a detection result of cladding light in a case where a light output is constant in the first embodiment.
FIG. 5 is a diagram showing a relationship between a light output and a detection result of a photodetector in a case where a divergence angle of laser light is constant in the first embodiment.
FIG. 6 is a diagram showing a relationship between a light output and a detection result of a photodetector in a case where a divergence angle of laser light changes in the first embodiment.
FIG. 7 is a block diagram showing a configuration of a laser apparatus according to a second embodiment.
FIG. 8 is a block diagram showing a configuration of a laser apparatus according to a third embodiment.
FIG. 9 is a block diagram showing a configuration of a laser apparatus according to a fourth embodiment.
FIG. 10 is a view for explaining an example of an NA adjusting device in the fourth embodiment.
FIG. 11 is a block diagram showing a configuration of a laser system according to a fifth embodiment.

### Description of Embodiments

Hereinafter, a divergence angle measurement device, a divergence angle measurement method, a laser apparatus, and a laser system according to embodiments of the present invention will be described in detail with reference to the drawings.

### [First Embodiment]

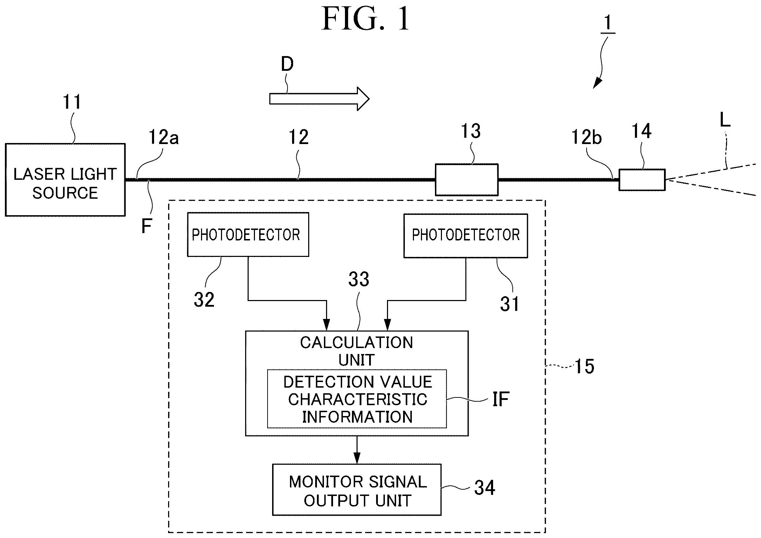

FIG. 1 is a block diagram showing a configuration of a laser apparatus according to a first embodiment.

As shown in FIG. 1, the laser apparatus 1 of the present embodiment includes a laser light source 11, a delivery fiber 12, a cladding light removal portion 13, a connector 14, and a divergence angle measurement device 15. The laser apparatus 1 launches laser light L from the connector 14 to the outside. In a case where the laser apparatus 1 is used, for example, for laser processing, the laser light L is launched from the head (not shown) of the connector 14 toward the surface to be processed.

The first end 12a of the delivery fiber 12 is connected to the laser light source 11 and receives the laser light L. The second end 12b of the delivery fiber 12 is connected to the connector 14. In the present embodiment, along the light propagation direction, a side closer to the first end 12a is referred to as a light input side and a side closer to the second end 12b is referred to as a light launch side. The direction from the laser light source 11 toward the connector 14 is referred to as a launch direction D.

The laser light source 11 is, for example, a fiber laser provided with a plurality of pumping light sources, and it excites the rare earth ions added to the core of the optical amplification fiber by the pumping light launched from the pumping light source and launches the laser light L. The types and the number of pumping light sources provided in the laser light source 11 are appropriately selected according to the wavelength and power of the laser light L. The delivery fiber 12 is an optical fiber that functions as a transmission medium for transmitting the laser light L launched from the laser light source 11. The first end 12a of the delivery fiber 12 is connected to the laser light source 11. The second end 12b of the delivery fiber 12 is connected to the connector 14. The connector 14 functions as a launch end of the laser light L, and is connected to the second end 12b of the delivery fiber 12.

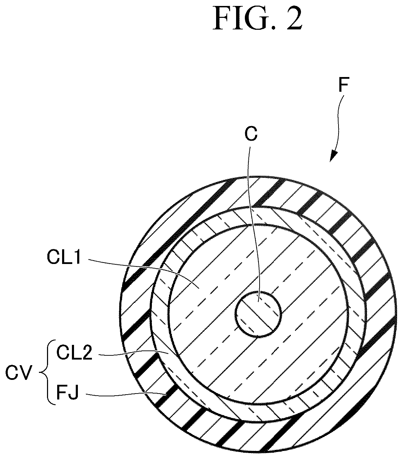

Here, the delivery fiber 12 used in the laser apparatus 1 will be described. FIG. 2 is a cross-sectional view showing an example of the delivery fiber 12. As shown in FIG. 2, the optical fiber F used as the delivery fiber 12 is, for example, a double cladding fiber. The optical fiber F has a core C, an inner cladding CL1, an outer cladding CL2, and a jacket FJ. The core C is formed into a columnar shape. The inner cladding CL1 has a cylindrical shape and covers the outer surface of the core C. The outer cladding CL2 has a cylindrical shape and covers the outer surface of the inner cladding CL1. The jacket FJ has a cylindrical shape and covers the outer surface of the outer cladding CL2.

The core C and the inner cladding CL1 of the optical fiber F shown in FIG. 2 are formed of, for example, glass. The outer cladding CL2 and the jacket FJ are formed of, for example, a resin. Hereinafter, the outer cladding CL2 and the jacket FJ may be collectively referred to as a coating CV. In addition, the inner cladding CL1 may be simply referred to as a cladding.

Here, the specifications of the optical fiber F constituting the delivery fiber 12 are, for example, as follows.

Core C: Composition: silica glass, diameter: 100 [µm], refractive index: 1.46
Inner cladding CL1: Composition: Fluorinated silica glass, outer diameter: 360 [µm], refractive index: 1.44
Outer cladding CL2: Composition: silicone, outer diameter: 500 [µm], refractive index: 3.9

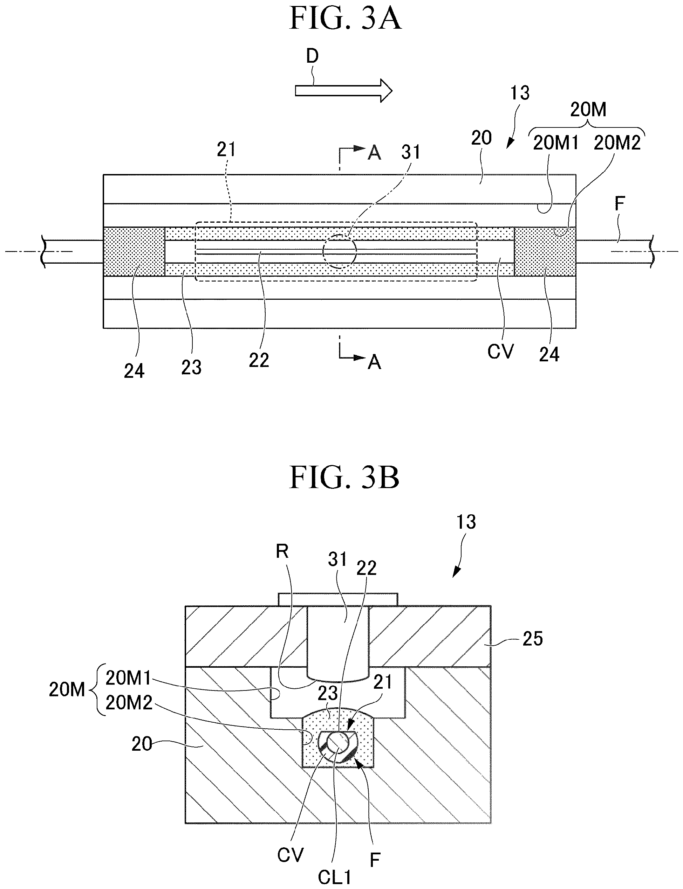

The cladding light removal portion 13 is provided in the middle of the delivery fiber 12 (between the first end 12a and the second end 12b). The cladding light removal portion 13 removes cladding light of the laser light L propagated in the launch direction D in the delivery fiber 12. FIGS. 3A, 3B are diagrams showing the configuration of the cladding light removal portion 13 provided in the laser apparatus 1, where FIG. 3A is a plan view and FIG. 3B is a cross-sectional view taken along line A-A in FIG. 3A.

As shown in FIGS. 3A and 3B, the cladding light removal portion 13 includes a housing 20, a coating removal area 21, and a lid 25. Hereinafter, the up-down direction in FIG. 3B is simply referred to as the up-down direction. In the up-down direction, a side closer to the lid 25is referred to as the upper side, and a side closer to the housing 20 is referred to as the lower side.

The housing 20 is formed of, for example, a metal material such as aluminum subjected to black alumite treatment. However, the material of the housing 20 is not particularly limited. The housing 20 is formed with a groove 20M which is recessed downward from the top surface. The groove 20M includes an upper groove 20M1 and a lower groove 20M2. The lower groove 20M2 is disposed below the upper groove 20M1 in FIG. 3B. The width of the lower groove 20M2 is narrower than the width of the upper groove 20M1 in the lateral direction orthogonal to both the longitudinal direction and the up-down direction. An optical fiber F provided with the coating removal area 21 is accommodated inside the lower groove 20M2 of the groove 20M. The optical fiber F is disposed such that the coating removal area 21 faces the opening side (upper side in FIG. 3B) of the groove 20M. The shape and size of the groove 20M are not particularly limited.

In the coating removal area 21, at least a part of the coating CV in the circumferential direction of the optical fiber F is removed. In the coating removal area 21, the coating CV is removed along both the longitudinal direction and the circumferential direction of the optical fiber F. A portion where the coating CV is removed and the inner cladding CL1 of the optical fiber F is exposed to the opening side of the groove 20M is referred to an exposed portion 22. The exposed portion 22 is covered with a sealing material 23 (details will be described later). That is, the upper surface of the coating removal area 21 is covered with the sealing material 23.

FIGS. 3A, 3B show an example in which a part of the coating CV in the circumferential direction of the optical fiber F is removed. How much of the coating CV is to be removed along the entire circumference of the optical fiber F, that is, how many degrees of 360 ° around the circumference the coating CV is to be removed is set appropriately, depending on the required cladding light removal capability.

In the longitudinal direction of the optical fiber F, as in the example shown in FIG. 3A, the coating CV may be continuously removed and the inner cladding CL1 may be continuously exposed. Alternatively, although not shown, the coating CV may be intermittently removed, and the exposed portions 22 and the non-exposed portions of the inner cladding CL1 may be alternately provided in the longitudinal direction. The length (length of the exposed portion 22) of the portion for removing the coating CV in the longitudinal direction of the optical fiber F is also appropriately set according to the required cladding light removal capability.

The sealing material 23 is filled in the space (lower groove 20M2) around the optical fiber F inside the groove 20M. The sealing material 23 is formed of, for example, a silicone resin having light transmissive properties. Thereby, the position of the optical fiber F inside the groove 20M is fixed. The sealing material 23 is formed of a material having a refractive index equal to the refractive index of the inner cladding CL1 or a refractive index higher than the refractive index of the inner cladding CL1. That is, in the coating removal area 21, the inner cladding CL1 is in contact with the sealing material 23 having a refractive index equal to the refractive index of the inner cladding CL1 or a refractive index higher than the refractive index of the inner cladding CL1. Therefore, the light propagated in the inner cladding CL1 leaks from the inner cladding CL1 to the outside of the sealing material 23 through the sealing material 23.

As shown in FIG. 3A, a sealing material 24 is provided at both ends in the longitudinal direction of the lower groove 20M2 of the groove 20M. Thus, the optical fiber F is fixed to the housing 20 at the longitudinal end of the housing 20. The sealing material 24 is formed of, for example, a silicone resin. The silicone resin forming the sealing material 24 may have light transmissive properties or may not have light transmissive properties.

Further, the cladding light removal portion 13 is provided with the first photodetector 31 of the divergence angle measurement device 15. The first photodetector 31 is, for example, an infrared photodiode, and receives leaked light of the laser light L leaked from the cladding of the optical fiber F. As shown in FIG. 3B, the first photodetector 31 is attached to the lid 25. The coating removal area 21 is provided to face the light receiving surface R of the first photodetector 31. The cladding light removal portion 13 leaks the cladding light, which has leaked from the core C to the cladding, to the outside of the cladding in the coating removal area 21. Furthermore, the divergence angle of the laser light L can be measured by causing the leaked cladding light to be incident on the first photodetector 31. As shown in FIG. 3A, when viewed in the direction perpendicular to the central axis of the optical fiber F, the first photodetector 31 is provided at a position overlapping the coating removal area 21. The first photodetector 31 is provided at the central portion of the coating removal area 21 in the longitudinal direction. However, as long as the first photodetector 31 and the coating removal area 21 are provided to overlap with each other, the first photodetector 31 may be provided at any position in the longitudinal direction.

The lid 25 to which the first photodetector 31 is attached is provided to cover the upper side of the groove 20M of the housing 20, as shown in FIG. 3B. Although the material of the lid 25 is not particularly limited, it is formed of, for example, the same aluminum as the housing 20. The first photodetector 31 is attached so as to penetrate the lid 25, and the light receiving surface R is located inside the groove 20M. Further, the light receiving surface R is located above the coating removal area 21 of the optical fiber F. That is, by providing the coating removal area 21 in the optical fiber F, the inner cladding CL1 of the optical fiber F faces the light receiving surface R of the first photodetector 31. With this configuration, the first photodetector 31 can efficiently receive the cladding light leaked from the optical fiber F.

However, the coating removal area 21 may not necessarily face the light receiving surface R of the first photodetector 31. Even in such a configuration, the cladding light leaked from the optical fiber F is reflected and scattered on the inner surface of the groove 20M, so the first photodetector 31 can receive the cladding light. Similarly, the light receiving surface R may not be located inside the groove 20M, but may be located inside, for example, a through hole formed in the lid 25.

The divergence angle measurement device 15 monitors the divergence angle of the laser light L propagated in the delivery fiber 12, and outputs information (first information I1) indicating the divergence angle of the laser light L or information (second information I2) indicating whether or not the divergence angle of the laser light L is within the range defined in advance. Here, the first information I1 described above may be information indicating the divergence angle itself of the laser light L, or may be a value obtained by converting the divergence angle of the laser light L into a numerical aperture (NA).

The "divergence angle of the laser light L" refers to an angle (degree θ) between the propagation direction of the laser light L and the central axis of the optical fiber. As the divergence angle of the laser light L propagated in the delivery fiber 12 increases, the divergence angle of the laser light L launched from the second end 12b of the delivery fiber 12 (or the connector 14) tends to increase. Therefore, the divergence angle of the laser light L launched from the second end 12b of the delivery fiber 12 (or the connector 14) can be obtained by obtaining the divergence angle of the laser light L propagated in the delivery fiber 12. Further, the above-described "value obtained by converting the divergence angle into a numerical aperture (NA)" is a value defined by sin θ.

As shown in FIG. 1, the divergence angle measurement device 15 includes a first photodetector 31, a second photodetector 32, a calculation unit 33, and a monitor signal output unit 34 (output unit). The divergence angle measurement device 15 monitors the divergence angle of the laser light L propagated in the delivery fiber 12, according to the detection results of the first and second photodetectors 31, 32. As described above, the first photodetector 31 is disposed in the cladding light removal portion 13 provided in the delivery fiber 12, and receives leaked light of the laser light L leaked from the cladding of the optical fiber F.

The second photodetector 32 is disposed in the vicinity of the delivery fiber 12 and detects Rayleigh scattered light of the laser light L propagated in the delivery fiber 12. Here, the Rayleigh scattered light has a power according to the power of the light propagated in the optical fiber F, regardless of the guiding direction of the laser light L in the delivery fiber 12. For example, a PIN photodiode can be used as the second photodetector 32 described above. In a case where a PIN photodiode is used as the second photodetector 32, the second photodetector 32 is disposed, for example, at a position spaced apart from the side surface of the optical fiber F (from the coating resin) by about a few [mm].

The second photodetector 32 is provided farther on the light input side (the side closer to the first end 12a) of the delivery fiber 12 than the cladding light removal portion 13. This is to minimize as much as possible the influence of the cladding light removed by the cladding light removal portion 13 on the detection result of the second photodetector 32. If the influence of the cladding light removed by the cladding light removal portion 13 is small, the second photodetector 32 may be provided farther on the light launch side (the side closer to the second end 12b) than the cladding light removal portion 13. That is, the second photodetector 32 can be disposed at any position as long as it can detect the Rayleigh scattered light of the laser light L propagated in the optical fiber F without being affected by the disturbance (for example, stray light or the like).

The calculation unit 33 monitors the divergence angle of the laser light L propagated in the delivery fiber 12, according to the detection result of the first photodetector 31 and the detection result of the second photodetector 32. Specifically, the calculation unit 33 obtains the power (power information IP) of the laser light L propagated in the optical fiber F, from the detection result of the second photodetector 32. Then, according to the power information IP and the detection value characteristic information IF, the divergence angle of the laser light L is obtained. Here, the detection value characteristic information IF is prepared for each power of the launched light which is launched from the laser apparatus 1, and is information in which the ratio of the detection results of the first and second photodetectors 31, 32 and the first information I1 are associated with each other. Further, the calculation unit 33 stores a threshold which is the maximum value of the divergence angle of the laser light L that can be tolerated by the laser apparatus 1, and determines whether the divergence angle of the laser light L exceeds the threshold.

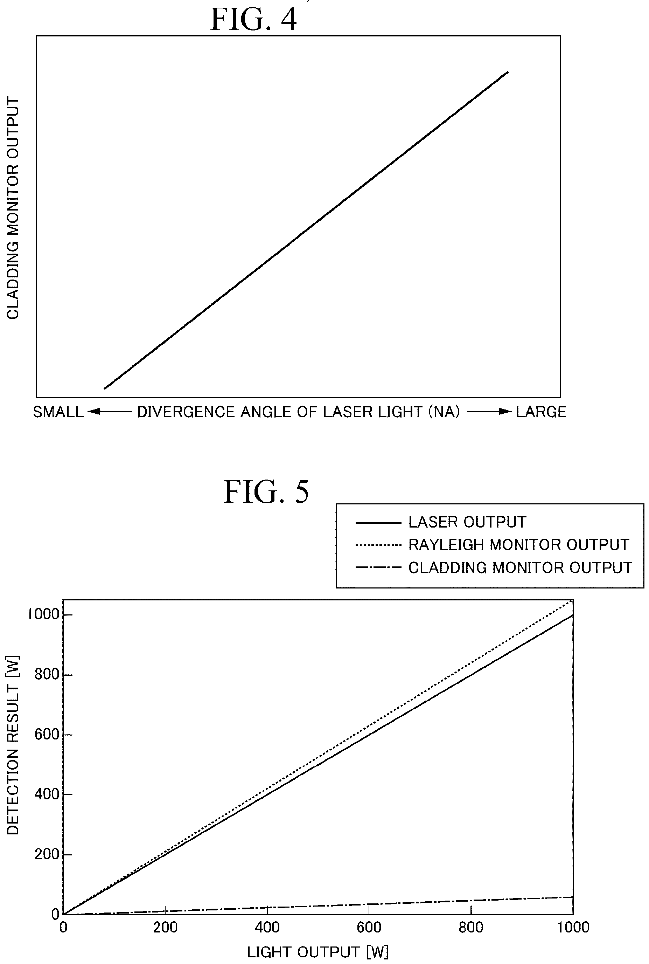

Here, the measurement principle of the divergence angle of the laser light L in the calculation unit 33 will be described. FIG. 4 is a diagram showing an approximate relationship between the divergence angle of the laser light L and the detection result of cladding light in a case where a light output is constant in the first embodiment. In the graph shown in FIG. 4, the divergence angle (or NA conversion value) of the laser light L is taken on the horizontal axis, and the detection result of the first photodetector 31 (cladding monitor output) is taken on the vertical axis. The horizontal and vertical axes of the graph shown in FIG. 4 are both arbitrary units. Referring to FIG. 4, in a case where the light output (power of the laser light L launched from the laser apparatus 1) is constant, it is understood that the cladding monitor output tends to increase as the divergence angle of the laser light L increases.

FIG. 5 is a diagram showing a relationship between the light output and the detection results of the first and second photodetectors 31, 32 in a case where the divergence angle of the laser light L is constant in the first embodiment. In the graph shown in FIG. 5, the power (light output) of the laser light L launched from the laser apparatus 1 is taken on the horizontal axis, and the detection results of the first and second photodetectors 31, 32 (cladding monitor output, Rayleigh monitor output) are taken on the vertical axis. The vertical axis in FIG. 5 is a value obtained by converting the detection results of the first and second photodetectors 31, 32 into power [W]. In FIG. 5, the graph (laser output) representing the power of the laser light L launched from the laser apparatus 1 is also shown for a comparison. The graph of the laser output is a graph in which points having the same values of the horizontal axis and the vertical axis are plotted.

Referring to FIG. 5, when the divergence angle of the laser light L is constant, it can be seen that both the detection result of the first photodetector 31 (cladding monitor output) and the detection result of the second photodetector 32 (Rayleigh monitor output) increase in direct proportion to the increase of the light output. Here, the detection results of the first and second photodetectors 31, 32 linearly increase as the light output increases. Therefore, when the divergence angle of the laser light L is constant, it can be seen that the ratio of detection results of the first and second photodetectors 31, 32 is constant regardless of the light output. In addition, it can be seen that the power of the laser light L launched from the laser apparatus 1 is a value obtained by subtracting the detection result of the first photodetector 31 (cladding monitor output) from the detection result of the second photodetector 32 (Rayleigh monitor output).

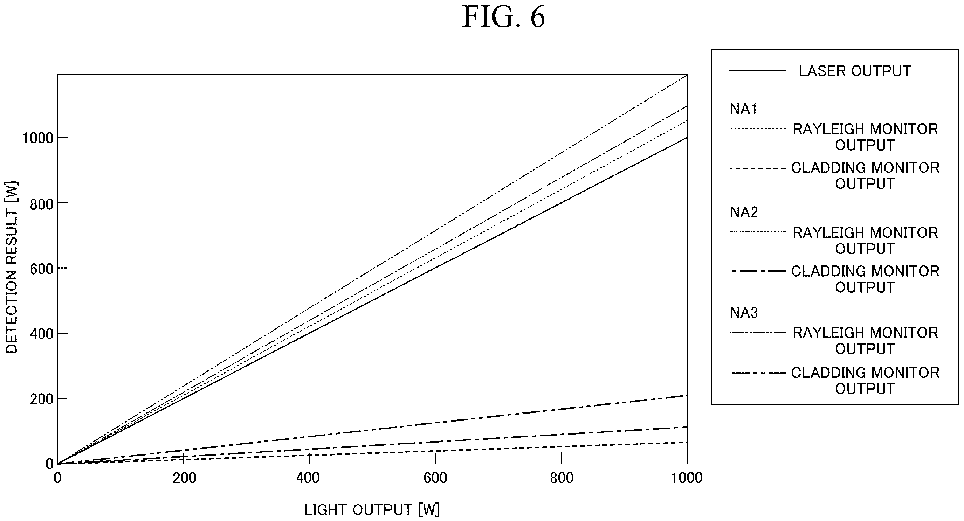

FIG. 6 is a diagram showing a relationship between the light output and the detection results of the first and second photodetectors 31, 32 in a case where the divergence angle of the laser light L changes in the first embodiment. In the graph shown in FIG. 6, as in the graph shown in FIG. 5, the power (light output) of the laser light L launched from the laser apparatus 1 is taken on the horizontal axis, and the detection results of the first and second photodetectors 31, 32 (cladding monitor output, Rayleigh monitor output) are taken on the vertical axis. The vertical axis is a value obtained by converting the detection results of the first and second photodetectors 31, 32 into power [W]. Also in FIG. 6, the graph (laser output) representing the power of the laser light L launched from the laser apparatus 1 is also shown for a comparison.

NA1, NA2, and NA3 shown in the legend in FIG. 6 indicate the divergence angles of laser light, and there is a relationship of NA1 < NA2 < NA3. Referring to FIG. 6, regardless of the magnitude of the divergence angle of the laser light L, it can be seen that both the detection result of the first photodetector 31 (cladding monitor output) and the detection result of the second photodetector 32 (Rayleigh monitor output) increase in direct proportion to the increase of the light output.

Further, regardless of the magnitude of the light output, it can be seen that both the detection result of the first photodetector 31 (cladding monitor output) and the detection result of the second photodetector 32 (Rayleigh monitor output) increase as the divergence angle of the laser light increases. Specifically, assuming that the light output is, for example, 800 [W] to facilitate understanding, the detection results of the first photodetector 31 (cladding monitor output) increase in the order of the divergence angles NA1, NA2, NA3 of the laser light, and the detection results of the second photodetector 32 (Rayleigh monitor output) also increase in the order of the divergence angles NA1, NA2, NA3 of the laser light. Here, as shown in FIG. 6, the detection results of the first and second photodetectors 31, 32 linearly increase as the light output increases, but the rate of increase (slope) differs depending on the divergence angle of the laser light L. Therefore, the ratio of the detection results of the first and second photodetectors 31, 32 differs depending on the divergence angle of the laser light L.

As described above, according to FIG. 4, as the divergence angle of the laser light L increases, the detection result of the first photodetector 31 (cladding monitor output) tends to increase. This is because a large amount of laser light leaks from the core C of the optical fiber F to the cladding. Further, according to FIGS. 5 and 6, even if the divergence angle of the laser light L is the same, as the power of the laser light L increases, the detection result of the first photodetector 31 (cladding monitor output) tends to increase. Further, according to FIG. 6, as the divergence angle of the laser light L increases, the detection results of the first and second photodetectors 31, 32 when the power of the laser light L increases tend to increase. Further, the ratio of the detection results of the first and second photodetectors 31, 32 differs depending on the divergence angle of the laser light L.

Therefore, the divergence angle of the laser light L launched from the laser apparatus 1 is measured in advance, the power of the laser light L at that time is detected by the second photodetector 32, and the cladding light (the laser light L leaked from the cladding of the optical fiber F) is detected by the first photodetector 31. Then, detection value characteristic information IF which is information in which the ratio of the detection results of the first and second photodetectors 31, 32 and the first information I1 are associated with each other is prepared in advance for each power of the launched light which is launched from the laser apparatus 1. In this way, the power of the laser light L propagated in the optical fiber F is obtained from the detection result of the second photodetector 32, and the divergence angle of the laser light L is obtained according to this power and the detection value characteristic information IF. The calculation unit 33 obtains the divergence angle of the laser light L according to such a principle.

The monitor signal output unit 34 outputs the first information I1 or the second information I2 obtained by the calculation unit 33 to the outside. For example, the monitor signal output unit 34 includes a display device such as a liquid crystal display device, and displays the first information I1 or the second information I2 obtained by the calculation unit 33 on the display device. Alternatively, the monitor signal output unit 34 has an external output terminal, and outputs the first information I1 or the second information I2 obtained by the calculation unit 33 from the external output terminal to the outside.

Next, the operation of the laser apparatus 1 with the above configuration will be described. When the power of the laser apparatus 1 is turned on, the launch of the laser light L from the laser light source 11 is started. The laser light L launched from the laser light source 11 enters the optical fiber F constituting the delivery fiber 12 from the first end 12a. The laser light L incident on the optical fiber F propagates in the optical fiber F. Here, when the laser light L propagates in the optical fiber F in the launch direction D, Rayleigh scattered light corresponding to the power of the laser light L is generated. Therefore, in the second photodetector 32 of the divergence angle measurement device 15, Rayleigh scattered light corresponding to the power of the laser light L is detected.

Further, when the laser light L propagated in the optical fiber F in the launch direction D reaches the cladding light removal portion 13, the cladding light is removed. Here, the laser light L propagated through the core C of the optical fiber F passes through the cladding light removal portion 13. However, the laser light (cladding light) propagated through the inner cladding CL1 is removed by leaking from the coating removal area 21 (see FIGS. 3A and 3B) of the cladding light removal portion 13 to the external space of the optical fiber F, and is detected by the first photodetector 31 of the divergence angle measurement device 15 (detection step).

The laser light L having passed through the cladding light removal portion 13 is launched from the connector 14 connected to the second end 12b of the optical fiber F. Here, when a work or the like is disposed in front of the connector 14, the laser light launched from the connector 14 is applied to the processing surface of the work, whereby the processing of the work is performed.

The second photodetector 32 provided in the divergence angle measurement device 15 outputs a detection signal according to the light amount of the Rayleigh scattered light, and the first photodetector 31 outputs a detection signal according to the light amount of the cladding light. The detection signals output from the first and second photodetectors 31, 32 are input to the calculation unit 33. The calculation unit 33 performs a calculation for obtaining the divergence angle of the laser light L, according to the detection signal of the first photodetector 31 and the detection signal of the second photodetector 32 (calculation step).

Specifically, the calculation unit 33, first, performs a calculation of obtaining the power (power information IP) of the laser light L propagated in the optical fiber F, from the detection result of the second photodetector 32. Next, according to the power information IP and the detection value characteristic information IF, a calculation of obtaining the divergence angle of the laser light L is performed. The information indicating the obtained divergence angle of the laser light L (or NA conversion value) (first information I1) is output from the monitor signal output unit 34 to the outside. The first information I1 is displayed, for example, on a display device (not shown).

As described above, in the present embodiment, the second photodetector 32 that detects the Rayleigh scattered light of the laser light L propagated in the delivery fiber 12 and the first photodetector 31 that detects cladding light which has been removed by the cladding light removal portion 13 are provided. Then, the calculation unit 33 is configured to obtain the divergence angle of the laser light L, according to the detection results of the first and second photodetectors 31, 32. Therefore, it is possible to measure the divergence angle of the laser light L of high output with a simple configuration.

### [Second Embodiment]

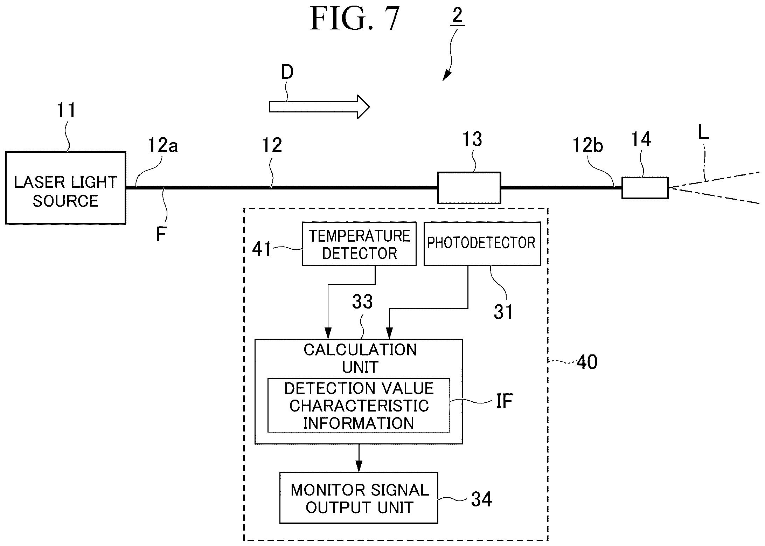

FIG. 7 is a block diagram showing a configuration of a laser apparatus according to a second embodiment.

As shown in FIG. 7, the laser apparatus 2 of the present embodiment has a configuration in which a divergence angle measurement device 40 is provided instead of the divergence angle measurement device 15 of the laser apparatus 1 shown in FIG. 1. The divergence angle measurement device 40 has a configuration in which the second photodetector 32 of the laser apparatus 1 shown in FIG. 1 is replaced with a temperature detector 41.

The temperature detector 41 is a detector that detects the temperature at a specific position of the cladding light removal portion 13 (for example, the temperature at a predetermined position of the housing 20 or the lid 25 shown in FIGS. 3A and 3B). The cladding light removed by the cladding light removal portion 13 is absorbed by the cladding light removal portion 13, whereby the temperature of the cladding light removal portion 13 rises. The power of the cladding light removed by the cladding light removal portion 13 is approximately proportional to the power of the laser light L propagated in the delivery fiber 12. Therefore, the degree of temperature rise of the cladding light removal portion 13 changes in accordance with the power of the laser light L propagated in the delivery fiber 12.

As described above, in the present embodiment, the temperature detector 41 that detects the temperature in the cladding light removal portion 13 and the first photodetector 31 that detects cladding light which has been removed by the cladding light removal portion 13 are provided. Further, the calculation unit 33 obtains the power (power information IP) of the laser light L propagated in the delivery fiber 12, according to the detection result of the temperature detector 41. Then, according to the obtained power information IP and the detection result of the first photodetector 31, the divergence angle of the laser light L is obtained using the detection value characteristic information IF. Therefore, it is possible to measure the divergence angle of the laser light L of high output with a simple configuration.

### [Third Embodiment]

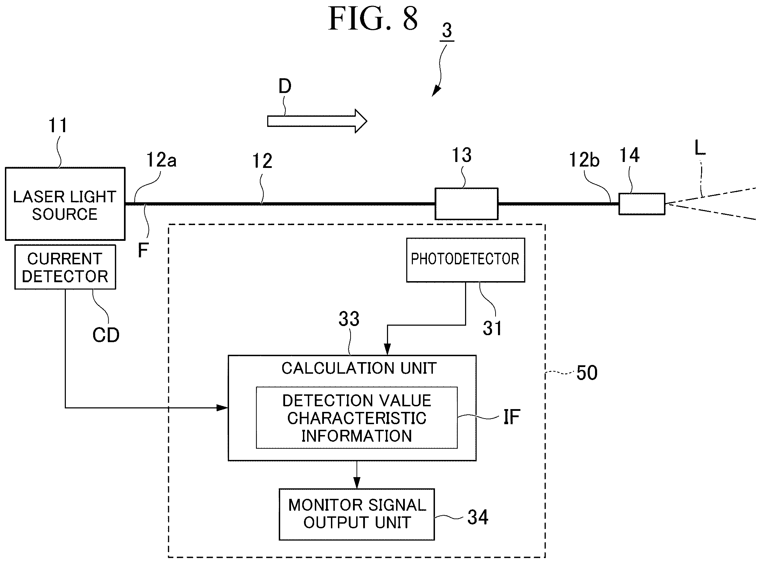

FIG. 8 is a block diagram showing a configuration of a laser apparatus according to a third embodiment.

As shown in FIG. 8, the laser apparatus 3 of the present embodiment has a configuration in which a divergence angle measurement device 50 is provided instead of the divergence angle measurement device 15 of the laser apparatus 1 shown in FIG. 1. In this divergence angle measurement device 50, the second photodetector 32 of the laser apparatus 1 shown in FIG. 1 is omitted, and the detection result of the current detector CD provided in the laser light source 11 is configured to be input to the calculation unit 33.

The current detector CD detects a drive current (for example, a current for driving a pumping light source provided in the laser light source 11) supplied to the laser light source 11. The power of the laser light launched from the laser light source 11 is approximately proportional to the drive current of the laser light source 11. Therefore, the current value detected by the current detector CD is a value corresponding to the power of the laser light (the laser light L propagated in the delivery fiber 12) launched from the laser light source 11.

As described above, in the present embodiment, the detection result of the current detector CD is input to the calculation unit 33, and the calculation unit 33 obtains the power (power information IP) of the laser light L propagated in the delivery fiber 12, according to the detection result of the current detector CD. Then, according to the obtained power information IP and the detection result of the first photodetector 31, the divergence angle of the laser light L is obtained using the detection value characteristic information IF. Therefore, it is possible to measure the divergence angle of the laser light L of high output with a simple configuration.

### [Fourth Embodiment]

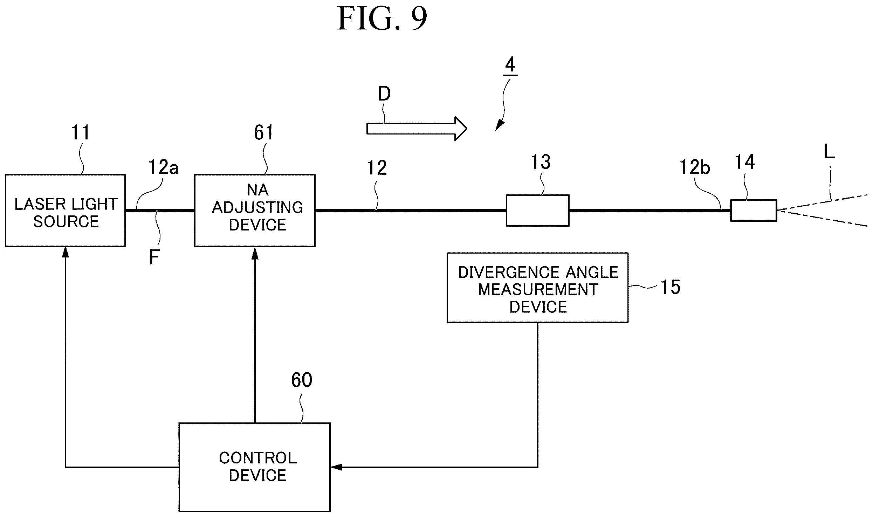

FIG. 9 is a block diagram showing a configuration of a laser apparatus according to a fourth embodiment.

As shown in FIG. 9, the laser apparatus 4 of the present embodiment has a configuration in which a control device 60 and an NA adjusting device 61 (adjustment device) are added to the laser apparatus 1 shown in FIG. 1. The laser apparatus 4 is configured such that the control device 60 controls the laser light source 11 and the NA adjusting device 61 in accordance with the measurement result of the divergence angle measurement device 15.

The control device 60 controls the NA adjusting device 61 while referring to the measurement result of the divergence angle measurement device 15 such that the divergence angle of the laser light L does not exceed a preset threshold. Further, if necessary, the control device 60 performs control to lower the output of the laser light source 11 (or control to stop the laser light source 11), or performs to issue an alarm, according to the measurement result of the divergence angle measurement device 15.

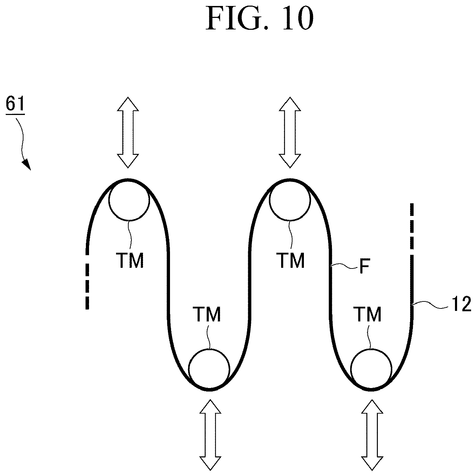

The NA adjusting device 61 is configured to adjust the numerical aperture (NA) of the laser light L propagated in the delivery fiber 12. FIG. 10 is a view for explaining an example of the NA adjusting device 61 in the fourth embodiment. The NA adjusting device 61 includes a plurality of tension members TM arranged in a zigzag shape. As shown in FIG. 10, the delivery fiber 12 is wrapped around the plurality of tension members TM. The tension member TM is, for example, a columnar shape (or cylindrical shape) element, and is configured to be movable in the arrow direction in FIG. 10.

When the plurality of tension members TM move away from one another along the arrow direction of FIG. 10, the delivery fiber 12 is pulled by the tension members TM and the bending diameter decreases. Then, among the laser light L propagated in the delivery fiber 12, the laser light L having a large divergence angle is more likely to leak to the outside than the laser light L having a small divergence angle. Thus, the divergence angle of the laser light L propagated in the delivery fiber 12 is adjusted.

As described above, in the present embodiment, the control device 60 and the NA adjusting device 61 are provided to enable adjustment of the divergence angle of the laser light L propagated in the delivery fiber 12 and the like. However, it is similar to the first embodiment in that the second photodetector 32 that detects the Rayleigh scattered light of the laser light L propagated in the delivery fiber 12 and the first photodetector 31 that detects cladding light which has been removed by the cladding light removal portion 13 are provided. Therefore, since the calculation unit 33 obtains the divergence angle of the laser light L, according to the detection results of the first and second photodetectors 31, 32, it is possible to measure the divergence angle of the laser light L of high output with a simple configuration, as in the first embodiment.

### [Fifth Embodiment]

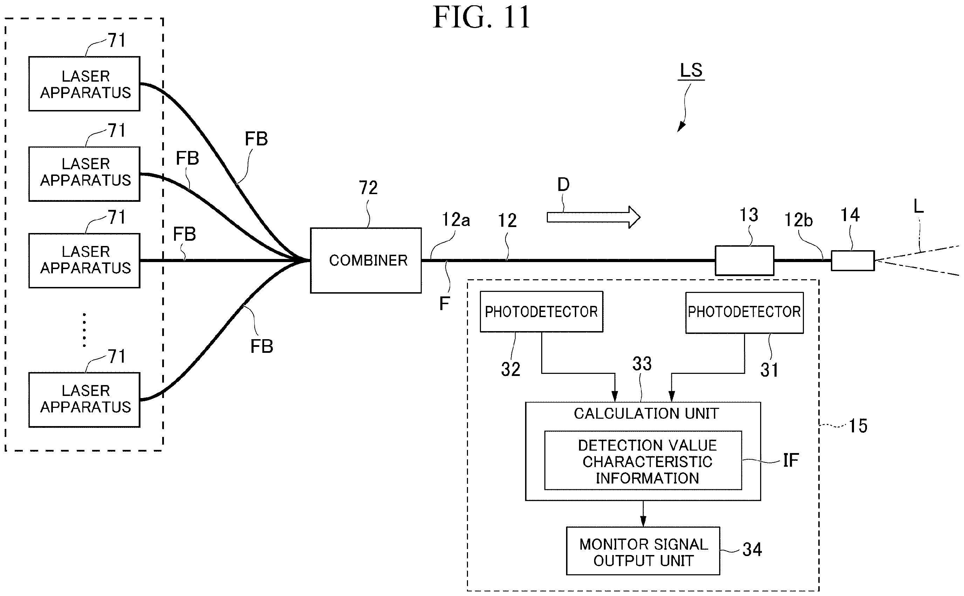

FIG. 11 is a block diagram showing a configuration of a laser system according to a fifth embodiment. As shown in FIG. 11, the laser system LS of the present embodiment has a configuration in which a plurality of laser apparatuses 71 and a combiner 72 (combining device) are provided instead of the laser light source 11 of the laser apparatus 1 shown in FIG. 1.

Similar to the laser light source 11 shown in FIG. 1, the laser apparatus 71 excites the rare earth ions added to the core of the optical amplification fiber by the pumping light launched from the pumping light source, and launches the laser light. As the laser apparatus 71, for example, the laser apparatuses 1 to 4 according to the above-described first to fourth embodiments can also be used. The laser apparatus 71 is not limited to the laser light source 11 or the laser apparatuses 1 to 4, and any device that launches a laser light can be used.

The combiner 72 optically couples a plurality of beams of laser light launched from the plurality of laser apparatuses 71. Specifically, in the inside of the combiner 72, the optical fibers FB extending from the laser apparatuses 71 are bundled, and integrated by melt elongated to form a single optical fiber. The integrated single optical fiber is fusion-spliced to the first end 12a of the optical fiber F which is the delivery fiber 12. Like the optical fiber F in the present embodiment, an optical fiber for guiding the light combined by the combiner 72 (combining device) is referred to as a launching fiber.

The configuration of the light launch side rather than the combiner 72 in the laser system LS of the present embodiment is the same as the configuration of the light launch side rather than the laser light source 11 in the laser apparatus 1 of the first embodiment. Therefore, as in the first embodiment, the calculation unit 33 obtains the divergence angle of the laser light L, according to the detection results of the second photodetector 32 that detects the Rayleigh scattered light of the laser light L propagated in the delivery fiber 12 (launching optical fiber) and the detection results of the first photodetector 31 that detects cladding light which has been removed by the cladding light removal portion 13.

Therefore, it is possible to measure the divergence angle of the laser light L of high output with a simple configuration.

Although the embodiment of the present invention has been described above, the present invention is not limited to the above-described embodiment, and can be freely changed within the scope of the present invention. For example, in the above embodiments, the divergence angle of the laser light L propagated in the optical fiber F is measured. However, for example, the divergence angle of the laser light L propagated in the optical fiber may be measured by each of the laser apparatuses 71 provided in the laser system LS of the fifth embodiment. Thus, it is possible to specify one of the laser apparatus 71 in which the divergence angle of the laser light L has increased.

Further, in the fifth embodiment, the example in which the divergence angle measurement device 15 is provided farther on the light launch side than the combiner 72 has been described. However, the divergence angle measurement device 15 may be provided farther on the light input side than the combiner 72, and the divergence angle of the laser light propagated in the optical fiber FB may be measured. Further, at least one of the first or second photodetectors 31, 32 provided in the divergence angle measurement device 15 may be provided farther on the light input side than the combiner 72, and the other may be provided farther on the light launch side than the combiner 72. For example, the first photodetector 31 may be provided farther on the light input side than the combiner 72, and the second photodetector 32 may be provided farther on the light launch side than the combiner 72.

Further, in the above embodiments, the cladding light removal portion 13 has a structure provided with the coating removal area 21 in which the coating CV of the at least a part of the optical fiber F in the circumferential direction is removed. However, two optical fibers may be fused to each other, and a fusion-spliced point may be used as the cladding light removal portion 13. Further, in the embodiment described above, the second photodetector 32 is configured to detect Rayleigh scattered light of the laser light L propagated in the delivery fiber 12. However, the second photodetector 32 may be configured to detect laser light reflected by a slant type FBG formed in the core of the delivery fiber 12, for example.

Further, the divergence angle measurement devices 15, 40, 50 of the present invention are applicable to laser apparatuses other than the laser apparatuses 1 to 4 according to the first to fifth embodiments described above. For example, the divergence angle measurement devices 15, 40, 50 may be applied to a fiber laser apparatus. Alternatively, they may be applied to a laser apparatus in which the oscillator is configured with those other than an optical fiber and the laser light launched from the oscillator is coupled on the optical fiber, such as a semiconductor laser (DDL: Direct Diode Laser) or a disk laser.

In addition, the specific description about the shape, dimension, arrangement, and material of each component of the laser apparatuses is not limited to the embodiments and can be suitably changed. For example, although the example in which the double cladding fiber is used as an optical fiber is shown in the above embodiments, a single cladding fiber may be used.

### Reference Signs List

- 1 to 4: laser apparatus
- 11: laser light source
- 12: delivery fiber (launching optical fiber)
- 13: cladding light removal portion
- 15: divergence angle measurement device
- 31: first photodetector
- 32: second photodetector
- 33: calculation unit
- 34: monitor signal output unit (output unit)
- 40: divergence angle measurement device
- 41: temperature detector
- 50: divergence angle measurement device
- 60: control device
- 61: NA adjusting device (adjusting device)
- 71: laser apparatus
- 72: combiner (combining device)
- C: core
- CD: current detector
- CL1: cladding (inner cladding)
- CV: coating
- F: optical fiber
- L: laser light
- LS: laser system

## Claims

1. A divergence angle measurement device which is configured to monitor a divergence angle of laser light propagated in an optical fiber having a core and a cladding, the divergence angle measurement device comprising:
a first photodetector that is configured to detect the laser light leaked from the cladding of the optical fiber; and
a calculation unit that is configured to obtain the divergence angle of the laser light, according to a detection result of the first photodetector and power information indicating power of the laser light propagated in the optical fiber.

2. The divergence angle measurement device according to claim 1,
wherein the optical fiber is provided with a cladding light removal portion where cladding light propagated through the cladding leaks and where the cladding light is removed, and
wherein the first photodetector is disposed in the cladding light removal portion, and is configured to detect the cladding light removed by the cladding light removal portion.

3. The divergence angle measurement device according to claim 1 or 2, further comprising:
a second photodetector that is disposed in a vicinity of the optical fiber, and is configured to detect Rayleigh scattered light of the laser light propagated in the optical fiber,
wherein the calculation unit is configured to obtain the divergence angle of the laser light using a detection result of the second photodetector as the power information.

4. The divergence angle measurement device according to claim 2, further comprising:
a second photodetector that is disposed in a vicinity of the optical fiber, and is configured to detect Rayleigh scattered light of the laser light propagated in the optical fiber,
wherein the second photodetector is provided farther on a light input side of the optical fiber than the cladding light removal portion.

5. The divergence angle measurement device according to claim 2, further comprising:
a temperature detector that is configured to detect a temperature of the cladding light removal portion,
wherein the calculation unit is configured to obtain the divergence angle of the laser light using a detection result of the temperature detector as the power information.

6. The divergence angle measurement device according to claim 2,
wherein the calculation unit is configured to obtain the divergence angle of the laser light using a detection result of a current detector that is configured to detect a drive current supplied to a laser light source which launches the laser light propagated in the optical fiber, as the power information.

7. The divergence angle measurement device according to any one of claims 1 to 6, further comprising:
an output unit that is configured to output first information indicating the divergence angle of the laser light obtained by the calculation unit, or second information indicating whether or not the divergence angle of the laser light obtained by the calculation unit is within a predetermined range.

8. A divergence angle measurement method for monitoring a divergence angle of laser light propagated in an optical fiber having a core and a cladding, the divergence angle measurement method comprising:
a detection step of detecting the laser light leaked from the cladding of the optical fiber; and
a calculation step of obtaining the divergence angle of the laser light, according to the detection result of the detection step and power information indicating power of the laser light propagated in the optical fiber.

9. A laser apparatus comprising:
a laser light source;
an optical fiber which has a core and a cladding, the optical fiber propagating laser light launched from the laser light source; and
the divergence angle measurement device according to any one of claims 1 to 7.

10. The laser apparatus according to claim 9, further comprising:
an adjusting device that is configured to adjust the divergence angle of the laser light propagated in the optical fiber; and
a control device that is configured to control the adjusting device according to a measurement result of the divergence angle measurement device.

11. A laser system comprising:
a plurality of laser apparatuses;
a combiner that is configured to combine light launched from the plurality of laser apparatuses;
an launching optical fiber that is configured to guide the light combined by the combiner; and
the divergence angle measurement device according to any one of claims 1 to 7 which is configured to monitor a divergence angle of laser light propagated in the launching optical fiber.
